# EUROPEAN PATENT SPECIFICATION

(11) **EP 4 115 739 B1**
(45) Date of publication and mention of the grant of the patent: **11.12.2024**
(21) Application number: 21184034.3
(22) Date of filing: 06.07.2021
(51) Int. Cl.: A22C 17/10, A22C 11/02

(54) **SYSTEM FOR MANUFACTURING SAUSAGE-SHAPED PRODUCTS HAVING A TUBULAR CASING PROVIDED WITH AT LEAST ONE IMPRINT AND A METHOD THEREFOR**
SYSTEM ZUR HERSTELLUNG WURSTFÖRMIGER PRODUKTE MIT EINER SCHLAUCHFÖRMIGEN HÜLLE, DIE MIT MINDESTENS EINEM AUFDRUCK VERSEHEN IST, UND VERFAHREN DAFÜR
SYSTÈME DE FABRICATION DE PRODUITS EN FORME DE SAUCISSES DOTÉ D'UN BOÎTIER TUBULAIRE AVEC AU MOINS UNE EMPREINTE ET PROCÉDÉ ASSOCIÉ

(43) Date of publication of application: 11.01.2023
(73) Proprietor: Poly-clip System GmbH & Co. KG, 65795 Hattersheim (DE)
(72) Inventor: ARNDT, Björn, 68723 Oftersheim (DE)
(74) Representative: Eisenführ Speiser

(56) References cited:
- EP-A1- 2 851 467
- EP-B1- 2 532 245
- EP-B1- 2 695 521
- US-A- 5 743 792
- US-A1- 2008 245 034
- US-A1- 2008 261 500

## Description

### FIELD OF THE INVENTION

The present invention relates to a system for manufacturing sausage-shaped products having a tubular casing provided with at least one imprint and a method therefor.

### BACKGROUND OF THE INVENTION

In the practice, it is known that, for example in the production of sausage-shaped products, filling material is fed by a filling device through a filling tube of a clipping device into a tubular casing, which is stored on the filling tube and which is closed at its front end by closure means, like a closing clip. The tubular casing is pulled-off from the filling tube while being filled. After a predetermined volume of filling material is filled into said tubular casing, a displacement device with a first and a second pair of displacement elements forms a plait-like portion of the tubular casing and the clipping device places and closes at least one further closure means at the plait-like portion forming the back end of the sausage-shaped product by respective closing tools, which are reversibly movable towards the plait-like portion.

A clipping device and a method for controlling a clipping device for producing sausage-shaped products and a method for detecting casing material bursts is already known from EP 2 460 412 A1. The clipping device fills material into a tubular casing already closed at its front end by a clip, and places one further clip on the back end of the tubular casing. A control unit controls the clipping device, a sensor measures the pull-off length of the tubular casing pulled off from the filling tube and a second sensor measures the movement of the filling material while being fed to the tubular casing. The control unit compares the ratio of the captured values of the pull-off length of the tubular casing and the movement of the filling material to predetermined comparison ratios to detect casing material bursts.

A filling device for filling viscous filling material in a tubular casing with a sensor for monitoring the drawn length of the casing from the supply of the casing is already known from EP 1 918 206 A1. The filling device comprises a closing valve, a filling tube arranged in filling flow direction of the filling material behind the closing valve, a clip setting and clip closing device arranged in filling flow direction of the filling material behind the filling tube, a supply of tubular casing at least partially arranged on the filling tube and a continuously measuring sensor for direct or indirect detection of a length of the casing material drawn from the supply. The output signal of the sensor is able to control at least the closing operation of the closing valve through which the pressurized filling material can be supplied to the filling tube.

Further, EP 1 918 206 A1 discloses a sealing device comprising a forming shoulder and a sealing tool, which is configured to seal opposing longitudinal edges of a foil to form a tubular casing of a sausage-shaped product.

From US 2008/0245034 A1, an apparatus for the production of film tube, which can be filled with liquid, viscous or granular filling material, from a film strip is known. In said apparatus, a film strip provided on a supply roll, is guided over a number of direction-changing rollers towards a forming shoulder, where the film strip is formed into a film tube and sealed by a sealing device, and forms a supply of film tube. A writing unit applies markings on the film strip in predefined spacings. Based on the markings, a first reader registers the length of the film strip drawn off from the supply roll. A second reader detects the length of sealed film tube pulled off from the film tube supply. The sealing operation is controlled based on the signals of the reader, such that a predetermined supply amount of film tube is maintained.

Document EP 2 695 521 B1 further discloses an additional system for manufacturing sausage-shaped products having a tubular casing provided with at least one imprint.

The above-mentioned disclosures provide means for monitoring the filling process of sausage-shaped products to either detect incidents during filling or provide continuous manufacturing. However, the prior art is silent about the improvement of accuracy in the production process, as there can be measurement uncertainties during production, e.g. among filling speed, density differences in the flowable filling material, uncertainties in the measured length of the casing. These measurement uncertainties can in combination lead to a greater variance of the produced products. As a result, the overall appearance of the produced goods can vary in shape and weight.

Furthermore, consumers expect an attractive form of sausage-shaped products on which the respective imprints, including various information regarding the sausage-shaped product, are always placed in the same position.

### SUMMARY OF THE INVENTION

The following description contains specific information pertaining to implementations in the present disclosure. The present application discloses systems and methods for manufacturing sausage-shaped products having a tubular casing using at least one imprint on the tubular casing for controlling the application of a further imprint or rather further imprints, in particular to ensure that the imprint is consistently at the same position relative to the sausage-shaped product.

The objective is achieved by a system for manufacturing sausage-shaped products having a tubular casing provided with at least one imprint according to the present invention as defined in independent claim 1 as well as by a method therefor as defined in independent claim 11. Further developments of the present invention are defined in the dependent claims.

According to a first aspect, the system for manufacturing sausage-shaped products having a tubular casing provided with at least one imprint, the system comprising at least one printer, a sealing device, a filling device, a clipping device, a control unit and at least one sensor being operatively connected with the control unit, wherein the at least one printer is configured to apply at least one imprint on a foil being provided for forming the tubular casing, wherein the sealing device is configured to seal the foil at opposing ends in longitudinal direction to form the tubular casing, wherein the filling device is configured to fill the tubular casing with a filling material, wherein the clipping device is configured to set at least one closure means, wherein the at least one sensor is configured to detect the position of an imprint on the tubular casing and at least one further characteristic of the tubular casing or the sausage-shaped product, wherein the control unit is configured to monitor the distance between the imprint and the at least one characteristic detected by the at least one sensor, and wherein a feedback control is implemented in the control unit to adjust the distance between an imprint to be applied on the foil bring provided for forming a tubular casing for a subsequent sausage-shaped product and the at least one further characteristic. According to this, it is ensured that the imprints are positioned at the same location on each sausage-shaped product. Therefore, it helps in producing sausage-shaped products with equal length and similar appearance.

In some embodiments, the at least one further characteristic is a subsequent imprint on the tubular casing of a sausage-shaped product, a closure means, or a rapid decrease/increase in the caliber of the sausage-shaped product. Therefore, different applications of this concept are possible.

In some embodiments, the control unit is configured to control the at least one printer based on the monitored distance between the imprint and the at least one further characteristic detected by the at least one sensor. By doing this, a feedback loop is employed and acts as an integrated automated quality management.

In some embodiments, the sealing device comprises an endless belt, which is guided around two horizontally and perpendicularly to the axis of a filling tube arranged guiding rollers, and which can be heated by means of a heating device. By adding this device, the system can further integrate the production of tubular casings.

In some embodiments, the system further comprises a further printer, which is configured to apply additional information on the foil of the tubular casing. The second printer enables the system to print imprints, additional to the first imprint. This helps in adding additional information on the sausage-shaped product.

In some embodiments, the at least one printer is a thermo-transfer printer. By choosing this kind of printer, the imprint is added in a fast and convenient manner.

In some embodiments, the imprint and the at least one further characteristic are positioned at predefined intervals on the tubular casing, preferably in regular intervals. By doing this, the deviation in the length of the sausage-shaped products is minimized.

In some embodiments, at least one sensor is positioned in flow direction of the tubular casing upstream of the clipping device. With this choice, the sensor can be positioned in the system, therefore being in an integrated position. This can help in fixing the absolute position of the sensor.

In some embodiments, at least one sensor is positioned in flow direction of the tubular casing downstream of the clipping device. With this choice, the sensor can also sense the previously set closing means.

In some embodiments, the at least one sensor is a CCD sensor or an imaging sensor. By doing this, the system is able to further distinguish between different characteristics, such as different imprints.

According to a further aspect, a method for manufacturing sausage-shaped products having a tubular casing provided with at least one imprint, the method comprises the steps of: providing a foil; applying at least one imprint on the foil; sealing the foil at opposing ends in longitudinal direction to form a tubular casing; filling the tubular casing with a filling material; and sealing the filled tubular casing in a clipping device with at least one closure means to form sausage-shaped products; wherein at least one sensor is configured to detect the position of an imprint on the tubular casing and at least one further characteristic of the tubular casing or the sausage-shaped product, wherein a control unit is configured to monitor the distance between the imprint and the at least one characteristic detected by the at least one sensor, and wherein a feedback control is implemented in the control unit to adjust the distance between an imprint to be applied on the foil being provided for forming the tubular casing and at last one characteristic.

In some methods, the at least one further characteristic is a subsequent imprint, the closure means, or a rapid decrease/increase in the caliber of the sausage-shaped product.

According to a further method, when the distance between the imprint and the at least one further characteristic just determined by the control unit deviates from the distance determined between an imprint and a characteristic at the beginning of the process for producing sausage-shaped products by a predetermined value, the position of imprints to be applied on the foil for subsequent sausage-shaped products are adjusted respectively.

In some methods, the predetermined value is in a range of +/- 5% of the value determined by the distance between the imprint and the characteristic at the beginning of the process for producing sausage-shaped products. This allows a control deviation in which the control unit does not intervene.

In some embodiments, the method for manufacturing sausage-shaped products is shut down, when the distance between the imprint and the at least further characteristic just determined by the control unit deviates from the predetermined value by a predetermined over-value. According to this, destruction of components can be avoided in case of malfunctions.

Moreover, in some embodiments, the system can comprise one or several printers. The printer can be of any type capable of applying imprints on a foil. In particular, the printer can be any type of a thermal printer, such as a thermo-transfer printer. The printer can also be an inkjet printer. The printer may be capable of printing colours, black and white prints or imprints that are not visible to the human eye. For example, the printer can print imprints only visible by the usage of UV light.

The system contains a sealing device, which is configured to seal a foil at opposing ends to form a tubular casing and to deliver a tubular casing to the filling device. The sealing device comprises a forming shoulder which can be tubular shaped. The forming shoulder can have a certain outer diameter and an inner bore. The tubular casing is resting on the outer surface of the forming shoulder. The sealing device can be flush connected to the filling device. Additionally, the sealing device can comprise a retention device at one end of the sealing device. The retention device is used for slowing down the pull speed of the tubular casing from the sealing device during filling. In some embodiments, the retention device is a coaxial brake ring mounted on one end of the sealing device. The tubular casing is wrapped around the retention device and stretched in radial direction, since the inner diameter of the tubular casing is in general smaller than the outer diameter of the retention device. This creates friction between the tubular casing and the retention device, effectively slowing down the pull speed during filling.

The filling material can be any type of filling material. In particular, the filling material can be a flowing filling material. The flowable filling material can include crumbs. The filling material can be sausage meat. The filling device fills the filling material into the tubular casing. The filling device comprises a filling pipe having the tubular casing positioned on its outer surface. The filling device can have any form of cross-section, in particular rectangular or circular. In some embodiments, the filling device is tubular shaped. The filling material can be introduced into the filling device at various filling speeds, preferably continuously.

The sausage-shaped products are closed on each end with at least one closure means. The closure means can be any mean capable of closing sausage-shaped products in a plait-like manner. For example, the closure means can be clips applied by a clipping device. The closure means close the open ends of the tubular casing. A displacer unit in the clipping device constricts the free end of the foil and applies at least one clip.

The system also comprises a control unit. The control unit can comprise a processor, an Analog-to-Digital converter (ADC) and a memory. The software for detecting characteristics is stored on the memory. The control unit is connected to the sensor and can also be connected to the printer. The control unit can also be connected to other parts of the system, such as the filling device, the sealing device or the clipping device, via connection means. The control unit processes the measured signals from the sensor. In particular, the control unit can determine the distance between imprints or between characteristics or between characteristics and imprints. This is achieved by taking into account the filling speed, which is considered a known constant and the measured time between imprints or characteristics detected by the sensor. The filling speed can be stored in the memory. The filling speed corresponds to the speed of the beginning of the sausage-shaped product during the filling step. The filling speed is usually measured in kg/s. With the density of the filling material and the cross-sectional area, the movement speed of the sausage-shaped product in production can be determined. With the movement speed and the measured time between two characteristics, the control unit is able to determine a distance. The control unit is then able to adjust the printing of the imprints on the foil, if necessary, by controlling the at least one printer. The process of measuring the distances between characteristics, imprints or combinations thereof and adjusting the imprints printed by the printer results in a self-regulating feedback loop. In particular, the control unit can comprise a feedback control to monitor and/or control the distance between the imprint and the characteristic of the sausage-shaped product. As a result, the system produces sausage-shaped products with smaller deviations in the position of the imprints. Also, the distances measured can be used to regulate the length of the sausage-shaped products.

The sensor can be any type of a sensor. For example, the sensor can be a photoelectric barrier, a CCD sensor, or an imaging sensor. The sensor is capable of measuring differences in the signal induced from sausage-shaped products or sausage-shaped products during the filling step. The sensor can be positioned next to the clipping device or between the clipping device and the filling device. Additionally, the sensor can comprise a light source. The light source is positioned next to the sensor to illuminate the sausage-shaped products. The reflected light from the sausage-shaped products favours the detection of the imprints or the characteristics by the sensor and the control unit.

The sealing device can be a thermal sealing device, which seals opposite edges of a foil together so that the foil forms a tubular casing. The sealing device can also be a sealing device which uses adhesive to glue the opposite edges together. The sealing device can also be a combination of both.

In particular, the control unit and the sensor are configured to detect characteristics of the sausage-shaped product. A characteristic can be an imprint, at least one closure mean or a rapid decrease or a rapid increase in the caliber of the sausage-shaped product. The control unit and the sensor are able to identify these characteristics and determine a length difference between characteristics.

For the production of the first sausage-shaped product, reference distances may be determined. The first reference distance may be the distance between one end of the sausage-shaped product and the imprint. A second reference distance can be the distance between two imprints or between the imprint and the second end of the sausage-shaped product. The reference distances are then used to regulate the distance intervals between the imprints on the foil. By applying imprints on the foil forming the tubular casing, the system is able to determine the length difference between imprints or between characteristics or between characteristics and imprints.

The printer is applying imprints on the foil. The imprints can be of any type, size and colour. For example, the imprints can be logos. Also, the imprints can be dates indicating the minimum shelf life of the product or the date of production. Also, the imprints can be non-visible for the human eye. The imprints can be positioned on any area of the foil. The imprints are positioned at predefined intervals on the foil, preferably in regular intervals.

Further advantages and preferred embodiments of the present invention will be described in the following together with the drawings listed below. The expressions "left", "right", "below" and "above" used in the following description, are referred to the drawings in an alignment such that the reference numbers and the notation of the Figs. used can be read in normal orientation.

### BRIEF DESCRIPTION OF THE DRAWINGS

- Fig. 1: is a side view of a system for manufacturing of sausage-shaped products according to an embodiment of the present invention.
- Fig. 2: is an enlarged view of a printer section of the system according to Fig. 1 with two printers and a supply reservoir for a foil.
- Fig. 3a: is a schematic view illustrating the interval between two imprints.
- Fig. 3b: is a schematic view illustrating the interval between a characteristic and an imprint.
- Fig. 4: is a schematic view illustrating the connections to a control unit.

### DETAILED DESCRIPTION OF THE FIGURES

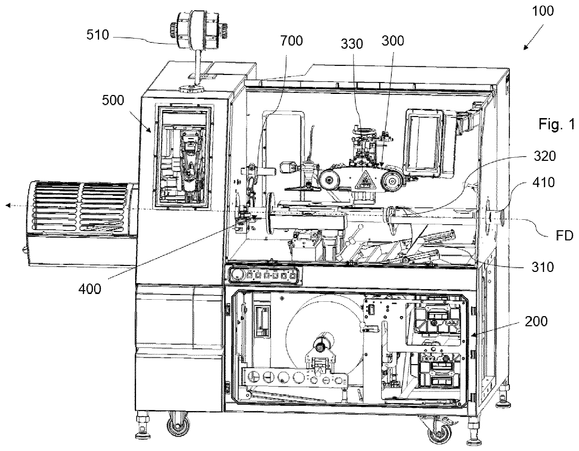

Fig. 1 depicts an isometric side view of a system 100 for manufacturing sausage-shaped products 10, like sausages, according to the invention. In the illustrated embodiment, system 100 comprises as main components a printing device 200, a sealing device 300, a filling device 400, a clipping device 500, a control unit 600 and a sensor 700.

Filling device 400 comprises at least one cylindrical filling tube 410 for feeding along feeding direction FD filling material 50 from a filler (not shown) into a tubular casing 30, located on filling tube 410, as will be explained below. Filling tube 410 made of stainless steel extends horizontally from its right end, where it is connected to the not shown filler, and terminates in an open end just in front of clipping device 500.

Clipping device 500 comprises two pairs of displacer means not shown, each pair consisting of an upper and a lower displacer element which can be reversibly moved relative to each other in a vertical plane, extending perpendicular to feeding direction FD, for creating a plait-like portion being at least substantially free of filling material 50. The pair of displacer means being arranged downstream to the other pair of displacer means, referred to feeding direction FD, can be reversibly moved at least substantially parallel to the feeding direction FD.

Clipping device 500 comprises further a pair of closure tools, also not shown. The pair of closure tools consists of a punch and a die that can be reversibly moved relative to each other in a vertical plane, extending perpendicular to feeding direction FD, between the two pairs of displacer means to close at least one closure means 60, such as a closure clip, on the plait-like portion after the two pairs of displacer means have created the plait-like portion. Above clipping device 500 are arranged two supplies 510 for closure means 60, e.g. in the form of clip reels, from each of which a clip row or strand can be drawn off and fed to the closure tools.

During operation, a foil supply 210 provides a foil 20 (not shown) which is fed into printer 200 section. Printing device 200 consists of two printers 200 which can apply imprints 40 on foil 20. Foil 20 is then forwarded to sealing device 300. Sealing device 300 further comprises a shaping device 320 in form of a shaping shoulder being arranged around filling tube 410. Further, a supply roll 310 is arranged in front of sealing device 300 to direct foil 20 in the direction of sealing device 300. Downstream of shaping device 320, with respect to filling direction FD, a sealing tool 330 is provided. Sealing tool 330 consists of an endless belt, which is guided around two horizontally and perpendicularly to the axis of the filling tube 410 arranged guiding rollers, and which can be heated by means of a heating device. The lower run of endless belt can be brought into contact with the outer edges of film material superimposed by shaping device 320, and the heat thus transferred welds or seals these outer edges together to form tubular casing 30. Tubular casing 30 is then closed on its downstream side with closure means 60. Following that, tubular casing 30 is being filled with filling material 50 by filling device 400. The intersection between the filled part and the unfilled part is then emptied by a displacer unit (not shown) and then closure means 60, i.e. a clip, is applied and closed. The steps are then repeated to continuously form foil 20 into tubular casing 30, first close them at their downstream end, fill them and then close them at their upstream end to form sausage-shaped product 10.

A sensor 700 for monitoring imprints 40 on foil 20 and/or a further characteristic 40, 60 of a sausage-shaped product under production is located between clipping device 500 and filling device 400. Sensor 700 can also be positioned in downstream direction after clipping device 500. In such a case the sensor 700 can detect an imprint 40 or a further characteristic of the just finished sausage-shaped product 10 or the sausage-shaped product 10 under production. In the former case, further characteristic 40, 60 can be a further imprint 40 on tubular casing 30 of this sausage-shaped product 10, a closure means 60 at the front end or rear end of this product and/or the front or rear end of this product itself. In the latter case, further characteristic 40, 60 can be a further imprint 40 on tubular casing 30 of this sausage-shaped product 10, a closure means 60 at the front end of this product and/or the front end of this product itself. Sensor 700 is sending information to a control unit 600, which then determines the interval length between imprint 20 and another characteristic 40, 60. It then regulates printers 200 to adjust imprint 40 on foil 20 according to the interval. Additionally shown in the illustration is a control interface for adjusting parameters of system 100.

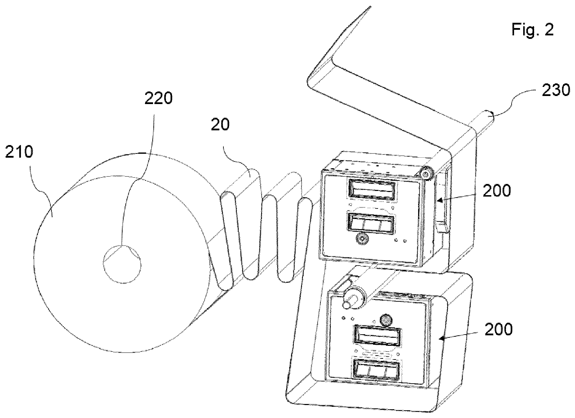

Fig. 2 depicts an enlarged view of printer 200 section of Fig. 1. The illustration depicts a foil supply roll 220 delivering foil 20 to a double printer 200 assembly. Foil 20 is fed into double printer 200 assembly and imprints 40 can be applied. Shown printer 200 assembly comprises two thermo-transfer printers 200. Foil 20 is fed through printer 200 section via pulleys 230. Afterwards, foil 20 is then fed to sealing device 300.

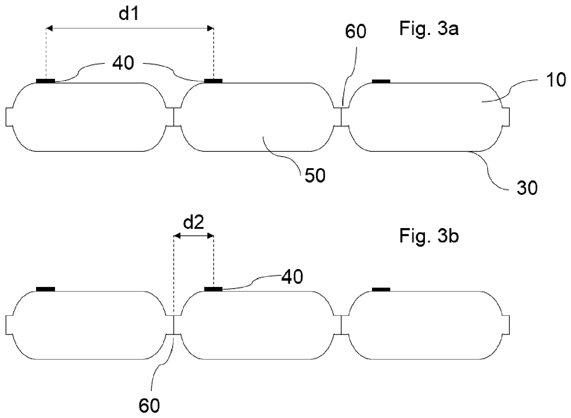

Fig. 3a is a schematic view of the interval between imprints 40 on sausage-shaped products 10. In this illustration, three sausage-shaped products 10 with imprints 40 are shown. A distance d1 is the distance between two imprints 40 on two sausage-shaped products 10. Sausage shaped products 10 comprise tubular casing 30 and filling material 50.

Fig. 3b is a schematic view of the interval between an imprint 40 on a sausage-shaped product 10 and a characteristic 40, 60. In this illustration, three sausage-shaped products 10 with imprints 40 are shown. A distance d2 is the distance between imprint 40 on sausage-shaped product 10 and a plait-like end of sausage-shaped product 10. In this illustration, distance d2 is the distance between the beginning of sausage-shaped product 10, which is a characteristic 60, and imprint 40. However, distance d2 can also be the distance between imprint 40 and the end of sausage-shaped product 10.

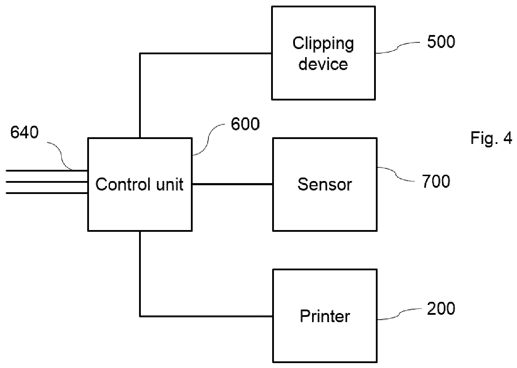

Fig. 4 is a schematic illustration depicting control unit 600, sensor 700 and clipping device 500. Sensor 700 and clipping device 500 are connected to control unit 600. Sensor 700 controls clipping device 500 based on the information of sensor 700. However, clipping device 500 can also control the at least one printer 200 in system 100. Furthermore, control unit 600 can be connected to other parts of the system such as the filling device or the sealing device by connection means 640.

According to a further embodiment, a method for manufacturing sausage-shaped products 10 having a tubular casing 30 provided with at least one imprint 40, the method comprising the steps of: providing a foil 20, applying at least one imprint 40 on the foil 20, sealing the foil 20 at opposing ends in longitudinal direction to form a tubular casing 30, filling the tubular casing 30 with a filling material 50, and sealing the filled tubular casing 30 in a clipping device 500 with at least one closure means 60 to form sausage-shaped products 10. Further, at least one sensor 700 detects the position of an imprint 40 on the tubular casing 30 and at least one further characteristic 40, 60 of the tubular casing 30 or the sausage-shaped product 10. The control unit 600 monitors the distance d1, d2 between the imprint 40 and the at least one characteristic 40, 60 detected by the at least one sensor 700. Moreover, a feedback control is implemented in the control unit 600 to adjust the distance d1, d2 between an imprint 40 to be applied on the foil being provided for forming the tubular casing 30 and at least one characteristic 40, 60.

When the distance between the imprint 40 and the at least one further characteristic 40, 60 just determined by the control unit 600 deviates from the distance determined between an imprint 40 and a characteristic 40, 60 at the beginning of the process for producing sausage-shaped products 10 by a predetermined value, the position of imprints 40 to be applied on the foil 20 for subsequent sausage-shaped products are adjusted respectively. Advantageously, the predetermined value is in a range of +/- 5%, preferably in the range of +/- 7,5%, further preferably in the range of +/- 10%, more preferably in the range +/-12,5% and further more preferably in the range of +/- 15% of the value determined by the distance between the imprint 40 and the characteristic 40, 60 at the beginning of the process for producing sausage-shaped products 10.

The method for manufacturing sausage-shaped products 10 is shut down, when the distance between the imprint 40 and the at least further characteristic 40, 60 just determined by the control unit 600 deviates from the predetermined value by a predetermined over-value, e.g. in the range of +/- 17,5%, preferably in the range of +/- 20%, further preferably in the range of +/- 22,5% and more preferably in the range +/- 25% of the value determined by the distance between the imprint 40 and the characteristic 40, 60 at the beginning of the process for producing sausage-shaped products 10.

### REFERENCE SIGNS

- FD: feeding direction
- 10: sausage-shaped product
- 20: foil
- 30: tubular casing
- 40: imprint
- 50: filling material
- 60: closure means
- 100: system
- 200: printer
- 210: foil supply
- 220: foil supply roll
- 230: pulley
- 300: sealing device
- 310: supply roll
- 320: shaping device
- 330: sealing tool
- 400: filling device
- 410: filling tube
- 500: clipping device
- 510: closure means supply
- 600: control unit
- 640: connection means
- 700: sensor

## Claims

1. A system (100) for manufacturing sausage-shaped products (10) having a tubular casing (30) provided with at least one imprint (40), the system (100) comprising:
at least one printer (200), a sealing device (300), a filling device (400), a clipping device (500), a control unit (600) and at least one sensor (700) being operatively connected with the control unit (600);
wherein the at least one printer (200) is configured to apply at least one imprint (40) on a foil (20) being provided for forming the tubular casing (30);
wherein the sealing device (300) is configured to seal the foil (20) at opposing ends in longitudinal direction to form the tubular casing (30);
wherein the filling device (400) is configured to fill the tubular casing (30) with a filling material (50);
wherein the clipping device (500) is configured to set at least one closure means (60);
**characterized in that** the at least one sensor (700) is configured to detect the position of an imprint (40) on the tubular casing (30) and at least one further characteristic (40, 60) of the tubular casing (30) or the sausage-shaped product (10);
wherein the control unit (600) is configured to monitor the distance (d1, d2) between the imprint (40) and the at least one characteristic (40, 60) detected by the at least one sensor (700); and
wherein a feedback control is implemented in the control unit (600) to adjust the distance (d1, d2) between an imprint (40) to be applied on the foil (20) being provided for forming a tubular casing (30) for a subsequent sausage-shaped product (10) and the at least one further characteristic (40, 60).

2. The system (100) according to claim 1, wherein the at least one further characteristic (40, 60) is a subsequent imprint (40) on the tubular casing (30) of a sausage-shaped product (10), a closure means (60), or a rapid decrease/increase in the caliber of said sausage-shaped product (10).

3. The system (100) according to claim 1 or 2, wherein the control unit (600) is configured to control the at least one printer (200) based on the monitored distance (d1, d2) between the imprint and the at least one further characteristic (40, 60) detected by the at least one sensor (700).

4. The system (100) according to any of claims 1 to 3, wherein the sealing device (300) comprises an endless belt, which is guided around two horizontally and perpendicularly to the axis of a filling tube arranged guiding rollers, and which can be heated by means of a heating device.

5. The system (100) according to any of claims 1 to 4, wherein the system (100) further comprises a further printer (200), which is configured to apply additional information on the foil (20) being provided for forming a tubular casing (30).

6. The system (100) according to any of claims 1 to 5, wherein the at least one printer (200) is a thermo-transfer printer (200).

7. The system (100) according to any of claims 1 to 6, wherein the imprint (40) and the at least one further characteristic (40, 60) are positioned at predefined intervals on the tubular casing (30), preferably in regular intervals.

8. The system (100) according to any of claims 1 to 7, wherein at least one sensor (700) is positioned in flow direction of the tubular casing (30) upstream of the clipping device (500).

9. The system (100) according to any of claims 1 to 8, wherein at least one sensor (700) is positioned in flow direction of the tubular casing (30) downstream of the clipping device (500).

10. The system (100) according to any of claims 1 to 9, wherein the at least one sensor is a CCD sensor or an imaging sensor.

11. A method for manufacturing sausage-shaped products (10) having a tubular casing (30) provided with at least one imprint (40), the method comprising the steps of:
providing a foil (20);
applying at least one imprint (40) on the foil (20);
sealing the foil (20) at opposing ends in longitudinal direction to form a tubular casing (30);
filling the tubular casing (30) with a filling material (50); and
sealing the filled tubular casing (30) in a clipping device (500) with at least one closure means (60) to form sausage-shaped products (10);
**characterized in that** at least one sensor (700) is configured to detect the position of an imprint (40) on the tubular casing (30) and at least one further characteristic (40, 60) of the tubular casing (30) or the sausage-shaped product (10);
wherein a control unit (600) is configured to monitor the distance (d1, d2) between the imprint (40) and the at least one characteristic (40, 60) detected by the at least one sensor (700); and
wherein a feedback control is implemented in the control unit (600) to adjust the distance (d1, d2) between an imprint (40) to be applied on the foil being provided for forming the tubular casing (30) and at least one characteristic (40, 60).

12. The method according to claim 11, wherein the at least one further characteristic (40, 60) is a subsequent imprint (40), the closure means (60), or a rapid decrease/increase in the caliber of the sausage-shaped product (10).

13. The method according to claim 11 or 12, wherein, when the distance between the imprint (40) and the at least one further characteristic (40, 60) just determined by the control unit (600) deviates from the distance determined between an imprint (40) and a characteristic (40, 60) at the beginning of the process for producing sausage-shaped products (10) by a predetermined value, the position of imprints (40) to be applied on the foil (20) for subsequent sausage-shaped products is adjusted respectively.

14. The method according to claim 13, wherein the predetermined value is in a range of +/- 5% of the value determined by the distance between the imprint (40) and the characteristic (40, 60) at the beginning of the process for producing sausage-shaped products (10).

15. The method according to claim 13 or 14, wherein the method for manufacturing sausage-shaped products (10) is shut down, when the distance between the imprint (40) and the at least further characteristic (40, 60) just determined by the control unit (600) deviates from the predetermined value by a predetermined over-value.

## Patentansprüche

1. System (100) zur Herstellung wurstförmiger Produkte (10), die eine schlauchförmige Hülle (30) aufweisen, die mit wenigstens einem Aufdruck (40) versehen ist, wobei das System (100) umfasst:
wenigstens einen Drucker (200), eine Versiegelungsvorrichtung (300), eine Füllvorrichtung (400), eine Clipvorrichtung (500), eine Steuereinheit (600) und wenigstens einen Sensor (700), der mit der Steuereinheit (600) operativ verbunden ist;
wobei der wenigstens eine Drucker (200) dazu konfiguriert ist, wenigstens einen Aufdruck (40) auf eine Folie (20) aufzubringen, die bereitgestellt wird, um die schlauchförmige Hülle (30) zu bilden;
wobei die Versiegelungsvorrichtung (300) dazu konfiguriert ist, die Folie (20) an gegenüberliegenden Enden in Längsrichtung zu versiegeln, um die schlauchförmige Hülle (30) zu bilden;
wobei die Füllvorrichtung (400) dazu konfiguriert ist, die schlauchförmige Hülle (30) mit einem Füllgut (50) zu füllen;
wobei die Clipvorrichtung (500) dazu konfiguriert ist, wenigstens ein Verschlussmittel (60) zu setzen;
**dadurch gekennzeichnet, dass** der wenigstens eine Sensor (700) dazu konfiguriert ist, die Position eines Aufdrucks (40) auf der schlauchförmigen Hülle (30) und wenigstens ein weiteres Merkmal (40, 60) der schlauchförmigen Hülle (30) oder des wurstförmigen Produkts (10) zu detektieren;
wobei die Steuereinheit (600) dazu konfiguriert ist, den Abstand (d1, d2) zwischen dem Aufdruck (40) und dem wenigstens einen Merkmal (40, 60), das von dem wenigstens einen Sensor (700) detektiert wird, zu überwachen; und
wobei in der Steuereinheit (600) eine Regelung implementiert ist, um den Abstand (d1, d2) zwischen einem Aufdruck (40), der auf die Folie (20), die zum Bilden einer schlauchförmigen Hülle (30) für ein nachfolgendes wurstförmiges Produkt (10) bereitgestellt wird, aufgebracht werden soll, und der wenigstens einen weiteren Eigenschaft (40, 60) anzupassen.

2. System (100) nach Anspruch 1, wobei das wenigstens eine weitere Merkmal (40, 60) ein nachfolgender Aufdruck (40) auf der schlauchförmigen Hülle (30) eines wurstförmigen Produkts (10), ein Verschlussmittel (60) oder eine schnelle Verringerung/Vergrößerung des Kalibers des wurstförmigen Produkts (10) ist.

3. System (100) nach Anspruch 1 oder 2, wobei die Steuereinheit (600) dazu konfiguriert ist, den wenigstens einen Drucker (200) auf der Grundlage des überwachten Abstands (d1, d2) zwischen dem Aufdruck und dem wenigstens einen weiteren Merkmal (40, 60), das von dem wenigstens einen Sensor (700) erfasst wird, zu steuern.

4. System (100) nach einem der Ansprüche 1 bis 3, wobei die Versiegelungsvorrichtung (300) ein Endlosband umfasst, das um zwei horizontal und senkrecht zur Achse eines Füllrohrs angeordnete Führungsrollen geführt wird und das mittels einer Heizvorrichtung erhitzt werden kann.

5. System (100) nach einem der Ansprüche 1 bis 4, wobei das System (100) ferner einen weiteren Drucker (200) umfasst, der dazu konfiguriert ist, zusätzliche Informationen auf die Folie (20) aufzubringen, die zur Bildung einer schlauchförmigen Hülle (30) bereitgestellt wird.

6. System (100) nach einem der Ansprüche 1 bis 5, wobei der wenigstens eine Drucker (200) ein Thermotransferdrucker (200) ist.

7. System (100) nach einem der Ansprüche 1 bis 6, wobei der Aufdruck (40) und das wenigstens eine weitere Merkmal (40, 60) in vorgegebenen Abständen auf der schlauchförmigen Hülle (30), vorzugsweise in regelmäßigen Abständen, angeordnet sind.

8. System (100) nach einem der Ansprüche 1 bis 7, wobei wenigstens ein Sensor (700) in Laufrichtung der schlauchförmigen Hülle (30) vor der Clipvorrichtung (500) angeordnet ist.

9. System (100) nach einem der Ansprüche 1 bis 8, wobei wenigstens ein Sensor (700) in Laufrichtung der schlauchförmigen Hülle (30) nach der Clipvorrichtung (500) angeordnet ist.

10. System (100) nach einem der Ansprüche 1 bis 9, wobei der wenigstens eine Sensor ein CCD-Sensor oder ein Bildsensor ist.

11. Verfahren zum Herstellen wurstförmiger Produkte (10), die eine schlauchförmige Hülle (30) aufweisen, die mit wenigstens einem Aufdruck (40) versehen ist, wobei das Verfahren die Schritte umfasst:
Bereitstellen einer Folie (20);
Aufbringen wenigstens eines Aufdrucks (40) auf die Folie (20);
Versiegeln der Folie (20) an gegenüberliegenden Enden in Längsrichtung, um eine schlauchförmige Hülle (30) zu bilden;
Füllen der schlauchförmigen Hülle (30) mit einem Füllgut (50); und
Versiegeln der gefüllten schlauchförmigen Hülle (30) in einer Clipvorrichtung (500) mit wenigstens einem Verschlussmittel (60), um wurstförmige Produkte (10) zu bilden;
**dadurch gekennzeichnet, dass** wenigstens ein Sensor (700) dazu konfiguriert ist, die Position eines Aufdrucks (40) auf der schlauchförmigen Hülle (30) und wenigstens ein weiteres Merkmal (40, 60) der schlauchförmigen Hülle (30) oder des wurstförmigen Produkts (10) zu detektieren;
wobei eine Steuereinheit (600) dazu konfiguriert ist, einen Abstand (d1, d2) zwischen dem Aufdruck (40) und dem wenigstens einen Merkmal (40, 60), das durch den wenigstens einen Sensor (700) detektiert wird, zu überwachen; und
wobei in der Steuereinheit (600) eine Regelung implementiert ist, um den Abstand (d1, d2) zwischen einem Aufdruck (40), der auf die Folie angebracht werden soll, die zum Bilden der schlauchförmigen Hülle (30) bereitgestellt wird, und wenigstens einem Merkmal (40, 60) einzustellen.

12. Verfahren nach Anspruch 11, wobei das wenigstens eine weitere Merkmal (40, 60) ein nachfolgender Aufdruck (40), das Verschlussmittel (60) oder eine schnelle Verringerung/Vergrößerung des Kalibers des wurstförmigen Produkts (10) ist.

13. Verfahren nach Anspruch 11 oder 12, wobei dann, wenn der Abstand zwischen dem Aufdruck (40) und dem wenigstens einen weiteren Merkmal (40, 60), der gerade von der Steuereinheit (600) bestimmt wird, von dem Abstand abweicht, der zwischen einem Aufdruck (40) und einem Merkmal (40, 60) zu Beginn des Prozesses zur Herstellung wurstförmiger Produkte (10) um einen vorbestimmten Wert abweicht, die Position von Aufdrucken (40), die auf die Folie (20) für nachfolgende wurstförmige Produkte aufgebracht werden sollen, entsprechend angepasst wird.

14. Verfahren nach Anspruch 13, wobei der vorbestimmte Wert im Bereich von +/- 5 % des Wertes liegt, der durch den Abstand zwischen dem Aufdruck (40) und dem Merkmal (40, 60) zu Beginn des Verfahrens zur Herstellung wurstförmiger Produkte (10) bestimmt wird.

15. Verfahren nach Anspruch 13 oder 14, wobei das Verfahren zum Herstellen wurstförmiger Produkte (10) abgeschaltet wird, wenn der Abstand zwischen dem Aufdruck (40) und dem wenigstens einen weiteren Merkmal (40, 60), der gerade von der Steuereinheit (600) bestimmt worden ist, von dem vorbestimmten Wert um einen vorbestimmten Überschreitungswert abweicht.

## Revendications

1. Système (100) de fabrication de produits en forme de saucisse (10) présentant une enveloppe tubulaire (30) pourvue d'au moins une impression (40), le système (100) comprenant :
au moins une imprimante (200), un dispositif de fermeture étanche (300), un dispositif de remplissage (400), un dispositif de coupe (500), une unité de commande (600) et au moins un capteur (700) fonctionnellement relié à l'unité de commande (600) ;
ladite au moins une imprimante (200) étant conçue pour appliquer au moins une impression (40) sur une feuille (20) destinée à former l'enveloppe tubulaire (30) ;
le dispositif de fermeture étanche (300) étant conçu pour fermer de manière étanche la feuille (20) en des extrémités opposées dans la direction longitudinale afin de former l'enveloppe tubulaire (30) ;
le dispositif de remplissage (400) étant conçu pour remplir l'enveloppe tubulaire (30) par un matériau de remplissage (50) ;
le dispositif de coupe (500) étant conçu pour placer au moins un moyen de fermeture (60) ;
**caractérisé en ce que** ledit au moins un capteur (700) est conçu pour détecter la position d'une impression (40) sur l'enveloppe tubulaire (30) et d'au moins une caractéristique supplémentaire (40, 60) de l'enveloppe tubulaire (30) ou du produit en forme de saucisse (10) ;
l'unité de commande (600) étant conçue pour surveiller la distance (d1, d2) entre l'impression (40) et ladite au moins une caractéristique (40, 60) détectée par ledit au moins un capteur (700) ; et
une commande de feedback étant mise en oeuvre dans l'unité de commande (600) afin d'ajuster la distance (d1, d2) entre une impression (40) à appliquer sur la feuille (20) destinée à former une enveloppe tubulaire (30) destinée à un produit en forme de saucisse (10) subséquent et ladite au moins une caractéristique supplémentaire (40, 60).

2. Système (100) selon la revendication 1, ladite au moins une caractéristique supplémentaire (40, 60) étant une impression (40) subséquente sur l'enveloppe tubulaire (30) d'un produit en forme de saucisse (10), un moyen de fermeture (60) ou une diminution/augmentation rapide du calibre dudit produit en forme de saucisse (10).

3. Système (100) selon la revendication 1 ou 2, l'unité de commande (600) étant conçue pour commander ladite au moins une imprimante (200) sur la base de la distance (d1, d2) surveillée entre l'impression et ladite au moins une caractéristique supplémentaire (40, 60) détectée par ledit au moins un capteur (700).

4. Système (100) selon l'une quelconque des revendications 1 à 3, le dispositif de fermeture étanche (300) comprenant une courroie sans fin, qui est guidée autour de deux rouleaux de guidage agencés horizontalement et perpendiculairement à l'axe d'un tube de remplissage et qui peut être chauffée au moyen d'un dispositif de chauffage.

5. Système (100) selon l'une quelconque des revendications 1 à 4, le système (100) comprenant en outre une autre imprimante (200), qui est conçue pour appliquer des informations supplémentaires sur la feuille (20) destinée à former une enveloppe tubulaire (30).

6. Système (100) selon l'une quelconque des revendications 1 à 5, ladite au moins une imprimante (200) étant une imprimante (200) à transfert thermique.

7. Système (100) selon l'une quelconque des revendications 1 à 6, l'impression (40) et ladite au moins une caractéristique supplémentaire (40, 60) étant positionnées à des intervalles prédéfinis sur l'enveloppe tubulaire (30), de préférence à intervalles réguliers.

8. Système (100) selon l'une quelconque des revendications 1 à 7, au moins un capteur (700) étant positionné en amont du dispositif de coupe (500) dans le sens d'écoulement de l'enveloppe tubulaire (30).

9. Système (100) selon l'une quelconque des revendications 1 à 8, au moins un capteur (700) étant positionné en aval du dispositif de coupe (500) dans le sens d'écoulement de l'enveloppe tubulaire (30).

10. Système (100) selon l'une quelconque des revendications 1 à 9, ledit au moins un capteur étant un capteur CCD ou un capteur d'imagerie.

11. Procédé de fabrication de produits en forme de saucisse (10) présentant une enveloppe tubulaire (30) pourvue d'au moins une impression (40), le procédé comprenant les étapes de :
mise à disposition d'une feuille (20) ;
application d'au moins une impression (40) sur la feuille (20) ;
fermeture étanche de la feuille (20) en des extrémités opposées dans la direction longitudinale afin de former une enveloppe tubulaire (30) ;
remplissage de l'enveloppe tubulaire (30) par un matériau de remplissage (50) ; et
fermeture étanche de l'enveloppe tubulaire (30) remplie dans un dispositif de coupe (500) à l'aide d'au moins un moyen de fermeture (60) afin de former des produits en forme de saucisse (10) ;
**caractérisé en ce qu'**au moins un capteur (700) est conçu pour détecter la position d'une impression (40) sur l'enveloppe tubulaire (30) et d'au moins une caractéristique supplémentaire (40, 60) de l'enveloppe tubulaire (30) ou du produit en forme de saucisse (10) ;
une unité de commande (600) étant conçue pour surveiller la distance (d1, d2) entre l'impression (40) et ladite au moins une caractéristique (40, 60) détectée par ledit au moins un capteur (700) ; et
une commande de feedback étant mise en oeuvre dans l'unité de commande (600) afin d'ajuster la distance (d1, d2) entre une impression (40) à appliquer sur la feuille destinée à former l'enveloppe tubulaire (30) et au moins une caractéristique (40, 60).

12. Procédé selon la revendication 11, ladite au moins une caractéristique supplémentaire (40, 60) étant une impression (40) subséquente, le moyen de fermeture (60) ou une diminution/augmentation rapide du calibre du produit en forme de saucisse (10).

13. Procédé selon la revendication 11 ou 12, dans lequel, lorsque la distance entre l'impression (40) et ladite au moins une caractéristique supplémentaire (40, 60) juste déterminée par l'unité de commande (600) s'écarte de la distance déterminée entre une impression (40) et une caractéristique (40, 60) au début du procédé de production de produits en forme de saucisse (10) d'une valeur prédéterminée, la position des impressions (40) à appliquer sur la feuille (20) destinée à des produits en forme de saucisse subséquents est ajustée respectivement.

14. Procédé selon la revendication 13, la valeur prédéterminée étant située dans une plage de +/- 5 % de la valeur déterminée par la distance entre l'impression (40) et la caractéristique (40, 60) au début du procédé de production de produits en forme de saucisse (10).

15. Procédé selon la revendication 13 ou 14, le procédé de fabrication de produits en forme de saucisse (10) étant arrêté lorsque la distance entre l'impression (40) et ladite au moins une caractéristique supplémentaire (40, 60) juste déterminée par l'unité de commande (600) s'écarte de la valeur prédéterminée d'une valeur excessive prédéterminée.
